# NOUVEAU FASCICULE DE BREVET EUROPEEN

(11) **EP 2 257 503 B2**
(45) Date de publication et mention de la décision concernant l'opposition: **22.12.2021**
(45) Mention de la délivrance du brevet: 13.02.2013
(21) Numéro de dépôt: 09720146.1
(22) Date de dépôt: 27.02.2009
(51) Int. Cl.: C03B 37/04, D04H 1/42, D04H 1/74, D04H 13/00, D04H 1/4218, D04H 1/4209, D04H 1/4226

(54) **PRODUIT A BASE DE FIBRES MINERALES ET SON PROCEDE D'OBTENTION**
PRODUKT AUF BASIS VON MINERALFASERN UND VERFAHREN ZU SEINER HERSTELLUNG
PRODUCT BASED ON MINERAL FIBRES AND METHOD OF OBTAINING SAME

(30) Priorité: 28.02.2008 FR 0851281
(43) Date de publication de la demande: 08.12.2010
(73) Titulaire: SAINT-GOBAIN ISOVER, 92400 Courbevoie (FR)
(72) Inventeur: LETOURMY, Arnaud, F-60280 MARGNY LES COMPIEGNE (FR); MANGEMATIN, Eric, F-60660 Cires les Mello (FR); MARTINS, Patrice, F-60260 Lamorlaye (FR)
(74) Mandataire: Saint-Gobain Recherche
(86) Numéro de dépôt international: PCT/FR2009/050326
(87) Numéro de publication internationale: WO 2009/112783

(56) Documents cités:
- EP-A- 0 091 381
- EP-A1- 0 399 320
- EP-A1- 1 182 177
- EP-A1- 1 418 292
- EP-A1- 1 457 612
- EP-A1- 1 561 847
- EP-A1- 2 257 502
- EP-B1- 1 293 616
- EP-B1- 1 370 496
- EP-B1- 1 561 847
- WO-A1-02/06171
- WO-A1-99/47766
- WO-A1-02/064520
- WO-A1-03/098209
- WO-A1-2009/112784
- WO-A2-03/008854
- FR-A- 1 370 771
- FR-A- 2 529 878
- FR-A- 2 576 671
- GB-A- 1 154 324
- TW-B- 593 919
- US-A- 4 394 337
- US-A- 4 759 974
- US-A- 4 759 974
- US-A- 4 889 546
- US-A- 5 277 706
- US-A- 5 609 934
- US-A- 5 723 209
- US-A- 5 866 486
- US-A1- 2004 088 938
- US-A1- 2005 023 731
- US-A1- 2006 281 622
- US-B2- 6 887 563
- Forschungsinstitut für Wärmeschutz e.V. München (Schlussbericht für den Zeitraum: 01.08.1998 bis 31.01.2001)
- FR 09719815 (Document de Priorité FR 0851288) publié en tant que WO 2009112784 A1
- Walter Eastes, Owens-Corning Fiberglas: "Nomenclature of Man-Made Vitreous Fibers", 15 Avril 1991 (1991.04.15), Nomenclature Committee of TIMA Inc.
- Anonymous: "Insulation theory", Internet, Extrait de l'internet: URL:http://www.paroc.com/SPPS/BI_attachmen ts/Insulation%20Theory.pdf [extrait le 2003-12-31]

## Description

L'invention concerne la fabrication des produits à base de laine minérale, telle que de la laine de verre, destinée à entrer notamment dans la composition de produits d'isolation thermique et éventuellement acoustique, plus particulièrement pour le doublage de parois et/ou de toitures.

Sur le marché de l'isolation, les fournisseurs souhaitent toujours proposer des produits de plus en plus performants en termes d'isolation thermique. La performance thermique d'un produit est généralement rendue par la connaissance de la conductivité thermique λ. On rappelle que la conductivité thermique λ d'un produit est la capacité du produit à se laisser traverser par un flux de chaleur; elle est exprimée en W/m.K. Plus cette conductivité est faible, plus le produit est isolant, et meilleure est donc l'isolation thermique.

Sur le marché actuel, les produits à base de fibres minérales qui sont en laine de roche ou en laine de verre se placent entre 0,040 et 0,035 W/m.K, voire au mieux à 0,032 W/m.K. A moins qu'il n'en soit spécifié autrement, la conductivité thermique est celle mesurée de façon conventionnelle à 10°C selon la norme ISO 8301.

D'autres solutions permettent d'obtenir une conductivité thermique de 0,032 W/m.K, voire même 0,031 W/m.K, mais il s'agit de produits totalement différents, tels qu'à base de polystyrènes expansés spéciaux. Or, l'invention se place uniquement dans le domaine des produits à base de fibres minérales.

Les produits à base de laine minérale, en particulier de laine de verre, sont obtenus par un procédé connu de centrifugation interne associée à un étirage par un courant gazeux à haute température.

Ce procédé de formation de fibres consiste à introduire un filet de verre fondu dans un centrifugeur, encore appelé assiette de fibrage, tournant à grande vitesse et percé à sa périphérie par un très grand nombre d'orifices par lesquels le verre est projeté sous forme de filaments sous l'effet de la force centrifuge. Ces filaments sont alors soumis à l'action d'un courant annulaire d'étirage à température et vitesse élevées qui est produit par un brûleur et qui longe la paroi du centrifugeur, courant qui les amincit et les transforme en fibres. Les fibres formées sont entraînées par ce courant gazeux d'étirage vers un dispositif de réception généralement constitué par une bande perméable aux gaz qui est associée à des moyens d'aspiration. Un liant nécessaire pour lier les fibres en un produit laineux est pulvérisé sur les fibres pendant qu'elles sont tirées vers le dispositif de réception. L'accumulation de fibres sur le dispositif de réception sous l'effet de l'aspiration fournit un tapis de fibres dont l'épaisseur peut varier selon le produit final à obtenir.

Ce procédé de transformation du verre en fibres est extrêmement complexe et requiert l'équilibrage d'un grand nombre de paramètres variables. En particulier, la pression du brûleur ainsi que la vitesse du gaz d'étirage jouent un rôle important dans l'optimisation de l'affinage de fibres. La conception de l'assiette de fibrage est également un facteur important.

Généralement, les fibres obtenues par centrifugation interne présentent un diamètre moyen de 3 µm, ce qui correspond à un micronaire de 3 sous 5 grammes, ou encore un diamètre moyen de 2 µm, correspondant à un micronaire de 2,8 sous 5 grammes.

On rappelle que la finesse des fibres est déterminée par la valeur de leur micronaire (F) sous 5 g. La mesure du micronaire appelée aussi " indice de finesse " rend compte de la surface spécifique grâce à la mesure de la perte de charge aérodynamique lorsqu'une quantité donnée de fibres extraites d'un matelas non ensimé est soumise à une pression donnée d'un gaz - en général de l'air ou de l'azote. Cette mesure est usuelle dans les unités de production de fibres minérales, est réalisée selon la norme DIN 53941 ou ASTM D 1448 et utilise un appareil dit " appareil micronaire ".

Toutefois un tel appareil présente une limite de mesure quant à une certaine finesse des fibres. Pour des fibres très fines, une finesse (« le micronaire ») peut être mesurée en l/min grâce à une technique connue et décrite dans la demande de brevet WO2003/098209. Cette demande de brevet concerne en effet un dispositif de détermination de l'indice de finesse de fibres comportant un dispositif de mesurage de l'indice de finesse, ledit dispositif de mesurage de l'indice de finesse étant pourvu d'une part, d'au moins un premier orifice relié à une cellule de mesure adaptée pour recevoir un échantillon constitué d'une pluralité de fibres et d'autre part, d'un second orifice relié à un dispositif de mesurage d'une pression différentielle située de part et d'autre dudit échantillon, ledit dispositif de mesurage de la pression différentielle étant destiné à être relié à un dispositif de production d'écoulement de fluide, caractérisé en ce que le dispositif de mesurage de l'indice de finesse comporte au moins un débitmètre volumétrique du fluide traversant ladite cellule. Ce dispositif donne des correspondances entre des valeurs « micronaire » et des litres par minute (l/mn).

A titre indicatif, on peut noter selon ce document WO2003/098209, une relation de correspondance entre les valeurs micronaire et la valeur du diamètre moyen de l'échantillon de fibres. Globalement, une valeur micronaire d'environ 12 l/mn correspond à un diamètre moyen de 2,5 à 3 µm, une valeur de 13,5 l/mn correspond sensiblement à un diamètre moyen de 3 à 3,5 µm, et enfin 18 l/mn à environ 4 à 5 µm.

Le document US 2006/0078720 A1 décrit un produit d'isolation fibreux contenant un fongicide.

Le document US 4 759 974 décrit un dispositif de fibrage du verre par centrifugation et un produit d'isolation en fibres de verre avec un micronaire compris entre 2 et 5 sous 5g.

Le document US 4 889 546 décrit un procédé et un dispositif pour former des fibres en matériau thermoplastique en étirant des fibres de verre grâce à un étirage gazeux à haute vitesse et température.

Des fibres fines d'environ 3 µm de diamètre moyen ont été réalisées pour certaines applications.

En particulier pour obtenir des voiles de verre de quelques millimètres d'épaisseur en vue de réaliser des filtres aérosols ou des séparateurs de batterie, le document WO 99/65835 propose un dispositif par centrifugation interne qui autorise ainsi l'obtention de fibres d'environ 3 µm de diamètre. Le dispositif de ce document comprend une assiette de centrifugation dotée d'orifices qui sont rassemblés en rangées, au moins deux rangées adjacentes ayant des orifices de diamètres différents et la hauteur de formation des fibres par l'assiette de centrifugation est inférieure ou égale à 35 mm. Mais ce type d'application pour filtres utilisant en outre des produits de très faible épaisseur, est très éloigné de l'application à des produits isolants thermiquement, et ne fait nullement référence à la notion de conductivité thermique.

Pour une autre application, en vue de produits d'isolation, on connaît du document EP1370496 un dispositif par centrifugation interne qui fournit des fibres fines dont le diamètre moyen n'est pas supérieur à 3,5 micromètres, avec 2,1 µm comme plus bas diamètre moyen obtenu.

Dans ce but, le brûleur de ce dispositif présente certaines spécificités en combinaison avec une configuration particulière de l'assiette de centrifugation. L'assiette comprend ainsi au moins deux zones annulaires dont le nombre d'orifices par unité de surface est différent d'une valeur supérieure ou égale à 5 %, la distance entre les centres des orifices les plus proches voisins d'une même zone annulaire étant sensiblement constante sur l'ensemble d'une même zone annulaire, et cette distance variant d'une zone à une autre d'au moins 3 %, en étant décroissante du haut vers le bas de l'assiette en position de centrifugation.

Un tel dispositif qui engendre des fibres plus fines améliore la conductivité thermique des produits obtenus pour une densité équivalente à celle des produits usuels. L'exemple donné dans ce document est un produit d'épaisseur 80 mm qui fournit à faible densité (9 kg/m³) une conductivité assez bonne de 41,2 W/m.K.

Toutefois, on souhaite toujours améliorer la conductivité thermique d'un produit afin d'atteindre une performance d'isolation satisfaisante sans pour autant utiliser une épaisseur trop élevée. En effet, en fonction de la conductivité thermique du matériau constituant le produit, on doit adapter l'épaisseur du produit pour fournir une performance, qui s'exprime par une résistance thermique (notée R) la plus élevée possible.

Il est clair qu'avec le produit décrit dans le document précédent EP1370496, la volonté d'augmenter la résistance thermique conduirait à augmenter de manière significative l'épaisseur du produit ce qui ne serait pas compatible avec certaines applications d'isolation de bâtiment.

L'invention a donc pour but de proposer un procédé de fabrication d'un produit d'isolation thermique à base de fibres minérales qui présente des propriétés améliorées d'isolation thermique de sorte qu'il puisse être utilisé dans des épaisseurs raisonnables pour l'application bâtiment à laquelle ce produit est destiné.

Le produit d'isolation thermique qui est à base de laine minérale, est tel que les fibres présentent un micronaire inférieur à 10 l/mn, de préférence inférieur à 7 l/mn, notamment compris entre 3 et 6 l/mn, tel que le matériau présente une conductivité thermique inférieure à 31 mW/m.K, notamment inférieure à 30 mW/m.K, et tel que les fibres sont essentiellement sensiblement parallèles aux grandes extensions du produit, notamment dans une proportion d'au moins 75%, voire même supérieure à 85%.

Le produit se caractérise ainsi par un diamètre moyen des fibres inférieur à 2µm, voire même inférieur à 1 µm.

Il s'est avéré selon l'invention que, pour une application spécifique d'isolation thermique, on a réussi à fabriquer un produit renfermant des fibres encore plus fines que dans l'art antérieur, avec une structure telle que le produit se caractérise par une conductivité thermique encore meilleure que dans l'art antérieur. Le produit permet incontestablement d'obtenir des performances d'isolation thermique améliorées, et fournit également par la finesse de ses fibres un produit plus doux, agréablement manipulable.

Selon une caractéristique, la densité du produit est d'au moins 30 kg/m³, de préférence entre 35 et 60 kg/m³, en particulier entre 40 et 55 kg/m³.

Avantageusement, les fibres sont essentiellement, notamment dans une proportion d'au moins 75 %, sensiblement parallèles aux grandes extensions du produit présentant plutôt une forme sensiblement parallélépipédique rectangle. On entend par sensiblement parallèle, un parallélisme à plus ou moins 30° près par rapport aux plans formant les grandes extensions du produit. Cet agencement parallèle des fibres s'oppose ainsi à la transmission de chaleur à travers l'épaisseur du produit (perpendiculairement auxdits plans). On minimise la proportion de fibres orientées selon l'épaisseur du produit (perpendiculairement aux grandes extensions), conduisant de ce fait à éviter le phénomène de transmission de chaleur via les passages d'air ménagés entre ces fibres sous forme de cheminées.

La structure est essentiellement une structure de type laine minérale composée de fibres, en particulier de verre, liées entre elles par un liant, dans des proportions de 5 à 8% en poids du produit.

Il est souhaitable en vue de la destination du produit d'ajouter des additifs usuels du type huileux pour capturer la poussière, du type antistatique, ou du type hydrofugeant tel que du silicone.

Selon une autre caractéristique, l'épaisseur du produit est d'au moins 30 mm, notamment de 40 à 150 mm selon l'application souhaitée et la résistance thermique désirée.

Pour obtenir un produit d'épaisseur adéquate, le produit peut se présenter sous forme de panneau découpé, éventuellement composé de plusieurs couches.

Le produit est utilisé plus particulièrement pour le doublage des parois et/ou des toitures dans le bâtiment.

Ce produit isolant thermiquement peut également être intégré à un système d'isolation acoustique.

Le produit est de préférence à base de fibres de verre, la proportion d'infibrés n'excédant pas 1 % pour limiter encore mieux les transferts thermiques.

Le produit est obtenu par un procédé de fibrage par centrifugation interne, au moyen d'une installation de fibrage qui présente des paramètres de fibrage adaptés pour fournir des fibres à l'indice de finesse souhaité.

Selon l'invention, le procédé de fabrication de laine minérale est tel que défini dans la revendication 1.

Pour une même configuration de centrifugeur selon l'invention, la pression du brûleur est ainsi de 500 mm CE, et d'au plus 750 mm CE, pour engendrer par exemple des fibres de micronaire de 5,5 l/mn, et respectivement de 3,4 l/mn. Ces valeurs de pression n'engendrent pas trop de turbulence, et permettent un empilement régulier des strates de fibres sur le tapis de réception et fournissent une fibre qui est très avantageusement un peu plus longue.

Selon une caractéristique, le procédé de l'invention est tel que le débit du matériau fondu arrivant dans le centrifugeur est inférieur à 18 tonnes/jour pour un centrifugeur présentant un nombre d'orifices d'au moins 32000, et selon de préférence une combinaison d'un débit d'au plus 14 tonnes/jour et d'un nombre d'orifices pour le centrifugeur d'au moins 36000.

Généralement, les assiettes qui présentent des diamètres de 600 mm n'excèdent pas 32000 orifices. L'invention fournit par contre une assiette dont le nombre d'orifices est sensiblement plus important que dans l'art antérieur augmentant le nombre d'orifices par unité de surface.

Le diamètre de l'assiette présente un diamètre compris entre 200 et 800 mm, la tirée de fibres par orifice étant adaptée au diamètre de l'assiette.

La hauteur de la bande de perçage de l'assiette n'excède de préférence pas 35 mm.

Le centrifugeur contient deux zones annulaires ou plus superposées l'une à l'autre, les orifices du centrifugeur présentant d'une zone à une autre des rangées d'orifices de diamètre différent et le diamètre par rangée annulaire étant décroissant du haut vers le bas de la bande périphérique de l'assiette en position de centrifugation. Le diamètre des orifices est compris entre 0,5 et 1,1 mm.

Selon encore une autre caractéristique, la distance entre les centres des orifices voisins de la même zone annulaire est constante ou non dans toute une zone annulaire, et cette distance varie d'une zone à l'autre d'au moins 3 % ou même d'au moins 10 % et diminue du haut vers le bas de la bande périphérique de l'assiette en position de centrifugation, avec en particulier une distance comprise entre 0,8 mm et 2 mm.

Le procédé de l'invention fournit ainsi par les réglages, essentiellement de la pression du brûleur, de la vitesse de rotation de l'assiette de centrifugation, et de manière non attendue de la tirée de matériau fondu par orifice et par jour de l'assiette de centrifugation, un produit dont les fibres sont particulièrement fines, selon un micronaire inférieur à 10 l/mn, avec pour plus de 65% des fibres un diamètre moyen inférieur à 1 µm, accompagné d'une conductivité thermique inférieure à 31 mW/m.K, voire même inférieure à 30 mW/m.K, ce que ne propose pas l'art antérieur.

En outre, pour contribuer à l'abaissement conséquent de la conductivité thermique, le procédé de l'invention réalise un agencement des fibres le plus à plat possible, c'est-à-dire selon une disposition des fibres qui est parallèle aux grandes extensions du produit.

Cet arrangement est en particulier obtenu par des caractéristiques relatives à la réception et à l'évacuation des fibres par le convoyeur prolongeant le tapis de réception. A cet effet, le procédé de l'invention consiste à régler la vitesse de défilement d'un convoyeur abouté au tapis de réception, supérieure à la vitesse de défilement dudit tapis de réception, notamment de plus de 10 % et de préférence d'au moins 15 %.

D'autres avantages et caractéristiques de l'invention vont à présent être décrits plus en détail en regard des dessins annexés sur lesquels :
- La figure 1 illustre une vue schématique en coupe verticale d'une installation de fibrage utilisée dans le procédé selon l'invention;
- La figure 2 illustre une vue schématique en coupe verticale du dispositif de fibrage de l'installation ;

La figure 1 représente de façon schématique une vue en coupe transversale et selon un plan vertical d'une installation 1 de formation de matelas de laine minérale.

L'installation 1 comporte de manière connue d'amont en aval, ou de haut en bas selon le sens d'écoulement de la matière étirable à l'état fondu, un dispositif de centrifugation interne 10 qui délivre des filaments d'une matière étirable, un dispositif d'étirage 20 délivrant un courant gazeux qui transforme les filaments en fibres qui tombent sous la forme d'un voile 2, un inducteur 30 annulaire situé sous le dispositif de centrifugation 10, un dispositif d'amenée de liant 40, un tapis de réception 50 des fibres sur lequel s'accumulent les fibres pour constituer le matelas. Le matelas est ensuite acheminé vers une étuve pour la cuisson des fibres et du liant au moyen d'un tapis de convoyage 60 qui prolonge dans un même plan le tapis de réception 50.

La figure 2 illustre plus en détail les dispositifs 10, 20 et 30 de l'installation de fibrage.

Le dispositif de centrifugation 10 comporte un centrifugeur 11, encore appelé assiette de fibrage, tournant à grande vitesse, sans fond dans sa partie inférieure, et percé au niveau de sa paroi périphérique 12 par un très grand nombre d'orifices par lesquels la matière fondue est projetée sous forme de filaments sous l'effet de la force centrifuge.

Le centrifugeur 11 sans fond est fixé à un moyeu en prise sur un arbre creux 13 de rotation selon un axe X monté vertical, l'arbre étant entraîné par un moteur non représenté.

Un panier 14 à fond plein est associé au centrifugeur en étant agencé à l'intérieur du centrifugeur de façon que son ouverture soit disposée en regard de l'extrémité libre de l'arbre creux 13 et que sa paroi 15 soit sensiblement éloignée de la paroi ou bande périphérique 12.

La paroi cylindrique 15 du panier est percée d'un petit nombre d'orifices 16 relativement gros, par exemple d'un diamètre de l'ordre de 3 mm.

Un filet de verre fondu alimente le centrifugeur en passant par l'arbre creux 13 et s'écoule dans le panier 14. Le verre fondu, par passage au travers des orifices 16 du panier, est alors distribué sous forme de filets primaires 16a et dirigés vers l'intérieur de la bande périphérique 12 d'où ils sont expulsés au travers des orifices 17 de l'assiette sous l'effet de la force centrifuge sous forme de filaments 17a.

Le dispositif d'étirage 20 est constitué d'un brûleur annulaire qui délivre un courant gazeux à température et vitesse élevées en longeant la paroi 12 du centrifugeur. Ce brûleur sert à maintenir la température élevée de la paroi du centrifugeur et contribue à l'amincissement des filaments pour les transformer en fibres.

Le courant gazeux d'étirage est généralement canalisé au moyen d'une nappe gazeuse froide enveloppante. Cette nappe gazeuse est produite par une couronne de soufflage 21 entourant le brûleur annulaire. Froide, elle permet de plus d'aider au refroidissement des fibres dont la résistance mécanique est ainsi améliorée par un effet de trempe thermique.

L'inducteur annulaire 30 chauffe le dessous du dispositif de centrifugation pour aider au maintien de l'équilibre thermique de l'assiette 11.

Le dispositif d'amenée de liant 40 est constitué d'une couronne au travers de laquelle s'écoule le voile de fibres 2. La couronne comporte une multiplicité de buses arrosant de liant le voile de fibres. De manière usuelle, le liant qui participe à la cohésion de fibres entre elles comporte des agents anti-poussière du type huileux, et des agents antistatiques.

La matière minérale que l'on transforme en fibre est plutôt du verre.

Tout type de verre transformable par le procédé dit de centrifugation interne peut convenir.

Il peut par exemple s'agir de préférence d'un verre borosilicocalcique pour lequel les proportions de bore sont significatives.

Selon l'invention, l'obtention de fibres fines est réalisée par les réglages de différents paramètres que sont en particulier :
- la pression du brûleur 20 ;
- la vitesse de rotation de l'assiette 11 ;
- la tirée de fibres que fournit par jour chaque orifice 17 de l'assiette.

Le brûleur annulaire 20 est de conception standard. La température du jet gazeux à sa sortie est comprise entre 1350 et 1500°C, de préférence aux environs de 1400°C.
Selon l'invention, la pression du brûleur est réglée entre 450 et 750 mm CE (on rappelle que 1 mmCE = 9,81 Pa) pour engendrer un jet gazeux d'étirage le mieux adapté à la finesse des fibres souhaitée, en combinaison avec les autres paramètres précités. Si de manière usuelle, la pression d'un brûleur est de 500 mm CE, on peut choisir selon l'invention d'augmenter la pression pour amincir les fibres, ce qui demande toutefois davantage d'énergie. Un compromis entre les différents paramètres cités plus haut est à réaliser pour obtenir le produit souhaité en fonction des facteurs économique et énergétique entrant en ligne de compte.

Selon l'invention, la vitesse de rotation de l'assiette est plus rapide que celle usuelle de 1900 tours par minute (tr/mn). L'assiette de l'invention tourne à une vitesse supérieure à 2000 tr/mn, par exemple à 2200 tr/mn.

Selon l'invention, la tirée de fibres par orifice d'une assiette est d'au plus 0,5 kg par jour, et de préférence n'excède pas 0,4 kg/jour. La tirée de fibres par jour et par orifice correspond au débit de matière fondue traversant chaque orifice par jour.

Cette tirée est bien entendue liée au débit de matière fondue délivrée en amont du centrifugeur et au nombre d'orifices percés dans le centrifugeur. Selon l'invention, le débit de matière fondue n'excède pas 19 tonnes par jour (t/jour), et de préférence n'excède pas 14t/jour. Comparativement, la tirée usuelle d'un four délivrant du verre fondu est généralement de l'ordre de 23 à 25 tonnes par jour. Quant à l'assiette, elle comporte au moins 32000 orifices, de préférence au moins 36000 orifices, donc un nombre supérieur à celui d'une assiette standard qui est généralement de 31846.

L'assiette de centrifugation présente un diamètre compris entre 200 et 800 mm, le nombre d'orifices et la tirée de matière fondue délivrée sont adaptés en conséquence. La tirée de fibres délivrée par une assiette sera d'autant plus faible que le diamètre de l'assiette sera petit. Le diamètre est préférentiellement de 600 mm.

L'assiette contient deux zones annulaires ou plus superposées l'une à l'autre, chaque zone étant pourvue d'une ou de plusieurs rangées annulaires d'orifices. Quelques caractéristiques particulières relatives à l'assiette peuvent par ailleurs aider à l'obtention de fibres fines.

La hauteur de bande de perçage de l'assiette, hauteur sur laquelle s'étalent les orifices, n'excède pas 35 mm.

Les orifices de l'assiette présentent d'une zone à une autre des rangées d'orifices de diamètre différent et le diamètre par rangée annulaire étant décroissant du haut vers le bas de la bande périphérique de l'assiette en position de centrifugation. Le diamètre des orifices est compris entre 0,5 et 1,1 mm.

La distance entre les centres des orifices voisins de la même zone annulaire est essentiellement constante dans toute une zone annulaire, cette distance variant d'une zone à l'autre d'au moins 3 % ou même d'au moins 10 % et diminuant du haut vers le bas de la bande périphérique de l'assiette en position de centrifugation, avec en particulier une distance comprise entre 0,8 mm et 2 mm.

Selon l'invention, le liant distribué par la couronne 40 est avantageusement dosé entre 5 et 8 %, et de préférence entre 5 et 7 %. La quantité de liant habituellement nécessaire dans les produits usuels et dans des proportions de 8 %, voire plus, est ici remplacée par de la quantité de fibres ; le produit présente ainsi un poids plus élevé en fibres conduisant à l'augmentation de la conductivité thermique λ.

Enfin, l'abaissement de la conductivité thermique λ est aussi lié à l'arrangement des fibres dans le matelas. Une majorité supérieure à 75 %, voire même supérieure à 85 %, est disposée de manière sensiblement parallèle aux grandes extensions du produit. A cette fin, la vitesse de déplacement du tapis de convoyage 60 est selon l'invention plus rapide que la vitesse du tapis de réception 50, selon une proportion supérieure à 10 %, et de préférence au moins égale à 15 %.

Ce changement de vitesse avec accélération amène les fibres à se disposer le plus à plat possible dans le plan de défilement des tapis, en s'orientant donc sensiblement parallèlement aux plus grandes extensions du matelas de fibres obtenu, c'est-à-dire de manière horizontale au plan des tapis, à plus ou moins un angle de 30° près.

On présente ci-après un exemple de produit obtenu conformément au procédé de l'invention.

L'installation comporte une assiette de fibrage de 600 mm et 36000 orifices, avec un agencement et un diamètre des orifices tels que décrits plus haut.

La tirée par orifice et par jour est de 0,4 kg.

La vitesse de rotation de l'assiette est de 2200 tr/mn.

La pression du brûleur est de 500 mm CE.

La vitesse du convoyeur 60 est 15 % plus rapide que celle du tapis de réception.

Le produit obtenu présente les caractéristiques suivantes :
- indice de finesse des fibres de 5,5 l/mn,
- plus de 65 % des fibres ont un diamètre moyen inférieur à 1 µm,
- conductivité thermique de 29,6 mW/m.K, mesurée à 10°C selon la norme ISO 8301,
- densité de 45 kg/m³
- teneur en liant de 5% en poids du produit,
- épaisseur de 45 mm,
- les fibres sont à plus de 80% sensiblement parallèles aux grandes extensions.

La détermination de l'orientation des fibres est effectuée de la manière suivante : on prélève dans le produit plusieurs éprouvettes parallélépipédiques (notamment au moins 6) de même taille, d'épaisseur identique à l'épaisseur du produit. La découpe est réalisée au moyen d'un instrument tranchant tel qu'une lame produisant une découpe nette sans entraînement des fibres dans la direction de découpe, ne dénaturant ainsi pas l'agencement des fibres formant le produit avant découpe. Chaque éprouvette est observée selon sa tranche, la surface observée est divisée en surfaces unitaires de petites dimensions, et les fibres sont détectées visuellement dans chaque unité de surface, et l'on relève l'angle formé par la direction des fibres par rapport à une direction horizontale parallèle à une grande extension du produit et l'on calcule l'angle moyen dans chacune des surfaces. Un outil de capture d'image couplé à un logiciel de traitement d'image peut être utilisé à cet effet. Pour chaque éprouvette, on détermine ainsi la fraction de fibres présentant un angle d'orientation s'inscrivant dans un secteur angulaire donné. Puis on fait la moyenne des données de chaque éprouvette pour exprimer l'orientation des fibres dans le produit. Dans cet exemple, on a déterminé que 80% des relevés d'angles se trouvaient dans le secteur 0°-30°et 150°-180° (fibres horizontales), alors que 15% des relevés d'angles se trouvaient dans le secteur 30°-60°et 120°-150° (fibres obliques) et 5% des relevés d'angles se trouvaient dans le secteur 60°-90°et 90°-120° (fibres verticales).

Une production stable de ce produit est obtenue dans des conditions satisfaisant les exigences de la norme EN13162, la valeur de conductivité thermique annoncée exprimant la limite représentant au moins 90 % de la production, déterminée avec un niveau de confiance de 90%.

On a pu également obtenir un produit de micronaire encore plus faible de 3,4 l/mn avec une augmentation de la pression du brûleur à 750 mm CE.

Ce produit peut être comparé avec un produit obtenu de manière plus standard, à partir d'une même assiette de 600 mm mais qui présente 31846 orifices et une tirée de fibres par orifice et par jour de 0,7 kg, la pression du brûleur étant de 500 mm CE et la vitesse de rotation de l'assiette étant de 1900 tr/mn.

Le produit comparatif réalisé présente les caractéristiques suivantes :
- indice de finesse des fibres de 2,8 sous 5g, ce qui représente une valeur supérieure à 10 l/mn,
- diamètre moyen des fibres de 2 µm,
- conductivité thermique de 34 mW/m.K,
- densité de 50 kg/m³
- épaisseur de 50 mm.

Pour fournir un produit d' épaisseur supérieure, par exemple 90 mm ou plus, procurant ainsi une résistance thermique de 3 ou plus, on propose d'assembler au moins deux couches du produit qui vient d'être décrit. Cette superposition de couches peut être réalisée avant réticulation du liant, en associant deux nappes entre la réception et l'étuve notamment entre le tapis de convoyage 60 et l'étuve. La cohésion des deux nappes est assurée par mise en commun du liant non réticulé présent à l'interface entre les deux nappes et réticulation du liant dans l'ensemble du produit dans l'étuve.

Par conséquent, la configuration de l'installation de fibrage selon plusieurs caractéristiques spécifiques, liées surtout à la rotation de l'assiette de fibrage, au brûleur, à la tirée de fibres, et complémentairement liées au tapis de réception et au convoyeur le suivant, a permis de manière non évidente de fournir un produit d'isolation thermique qui jusque là n'existait pas.

Le produit par ses fibres très fines engendre l'avantage d'un toucher plus doux, rendant sa manipulation bien moins incommodante.

Le produit par sa conductivité thermique bien abaissée procure une isolation thermique encore plus performante et permet d'atteindre un niveau de résistance thermique optimal dans des épaisseurs raisonnables.

Enfin, le produit par sa densité plutôt supérieure à 30 kg/m³ se présente sous forme de plaques relativement rigides, qui en outre par une épaisseur usuelle, sont ainsi aisément manipulables, et peuvent être facilement découpées et mises en place comme voulu contre des parois à isoler. Et, comme on peut le voir avec l'exemple comparatif, on réussit à réduire la densité du produit, le produit étant donc moins lourd, à réduire son épaisseur et à parvenir à une meilleure conductivité thermique.

## Revendications

1. Procédé de fabrication de laine minérale à l'aide d'une installation comportant un dispositif par centrifugation interne qui comprend un centrifugeur (11) apte à tourner autour d'un axe X, notamment vertical et dont la bande périphérique (12) est percée d'une pluralité d'orifices (17) pour délivrer des filaments d'un matériau fondu, un moyen d'étirage gazeux à haute température sous forme d'un brûleur annulaire (20) qui assure l'étirage des filaments en fibres, et un tapis de réception (50) associé à des moyens d'aspiration pour réceptionner les fibres, **caractérisé en ce qu'**il consiste à régler une combinaison de paramètres qui sont au moins, la pression du brûleur entre 450 et 750 mm CE, la rotation du centrifugeur à une vitesse supérieure à 2000 tours/minute, et la tirée de fibres par jour et par orifice du centrifugeur qui est d'au plus 0,5 kg, et de préférence d'au plus 0,4 kg et **en ce que** l'installation comporte un convoyeur (60) qui prolonge le tapis de réception (50), la vitesse de défilement du convoyeur (60) étant supérieure à la vitesse de défilement du tapis de réception (50), notamment de plus de 10 % et de préférence d'au moins 15 %.

2. Procédé selon la revendication 1, **caractérisé en ce que** le débit du matériau fondu arrivant dans le centrifugeur est inférieur à 18 tonnes/jour pour un centrifugeur présentant un nombre d'orifices d'au moins 32000, et de préférence selon une combinaison de débit d'au plus 14 tonnes/jour et d'un nombre d'orifices pour le centrifugeur d'au moins 36000.

3. Procédé selon la revendication 1 ou 2, **caractérisé en ce que** le centrifugeur présente un diamètre compris entre 200 et 800 mm, la tirée de fibres par orifice étant adaptée au diamètre de l'assiette.

4. Procédé selon l'une des revendications 1 à 3, **caractérisé en ce que** le centrifugeur présente une hauteur de bande de perçage pour les orifices d'au plus 35 mm.

5. Procédé selon l'une des revendications 1 à 4, **caractérisé en ce que** le diamètre des orifices du centrifugeur est compris entre 0,5 et 1,1 mm.

6. Procédé selon l'une des revendications 1 à 5, **caractérisé en ce que** les orifices du centrifugeur sont répartis en plusieurs zones annulaires, les orifices présentant d'une zone à une autre des rangées d'orifices de diamètre différent et le diamètre par rangée annulaire étant décroissant du haut vers le bas de la bande périphérique de l'assiette en position de centrifugation.

7. Procédé selon la revendication 6, **caractérisé en ce que** la distance entre les centres des orifices voisins de la même zone annulaire est constante ou non dans toute une zone annulaire, et cette distance varie d'une zone à l'autre d'au moins 3 % ou même d'au moins 10 % et diminue du haut vers le bas de la bande périphérique de l'assiette en position de centrifugation, avec en particulier une distance comprise entre 0,8 mm et 2 mm.

## Patentansprüche

1. Verfahren zur Herstellung von Mineralwolle mittels einer Anlage mit einer Vorrichtung zum inneren Zentrifugieren, welche ein um eine insbesondere vertikale Achse X drehbares Schleuderorgan (11), dessen Umfangsmantel (12) von einer Vielzahl von Öffnungen (17) zum Ausgeben von Filamenten eines Schmelzematerials durchsetzt ist, eine Einrichtung zum Hochtemperatur-Gasziehen in Form eines Ringbrenners (20), der das Ausziehen der Filamente zu Fasern bewirkt, sowie ein Ablageband (50) für die Ablage der Fasern, das Ansaugeinrichtungen zugeordnet ist, aufweist, wobei das Verfahren **dadurch gekennzeichnet ist, dass** es darin besteht, eine Kombination von Parametern zu regulieren, bei denen es sich zumindest um den Brennerdruck von zwischen 450 und 750 mmWS, die Drehung des Schleuderorgans mit einer Geschwindigkeit von mehr als 2000 U/min., und die Faserziehrate pro Tag und Öffnung des Schleuderorgans von höchstens 0,5 kg und bevorzugt von höchstens 0,4 kg handelt, sowie dadurch, dass die Anlage ein das Ablageband (50) verlängerndes Förderorgan (60) aufweist, wobei die Laufgeschwindigkeit des Förderorgans (60) um insbesondere mehr als 10% und bevorzugt um mindestens 15% höher als die Laufgeschwindigkeit des Ablagebandes (50) ist.

2. Verfahren nach Anspruch 1, **dadurch gekennzeichnet, dass** der Durchsatz des im Schleuderorgan eintreffenden Schmelzematerials bei einem Schleuderorgan mit einer Anzahl von Öffnungen von mindestens 32000 weniger als 18 t/Tag beträgt, und zwar bevorzugt gemäß einer Kombination aus einem Durchsatz von höchstens 14 t/Tag und einer Anzahl von Öffnungen für das Schleuderorgan von mindestens 36000.

3. Verfahren nach Anspruch 1 oder 2, **dadurch gekennzeichnet, dass** das Schleuderorgan einen Durchmesser von zwischen 200 und 800 mm aufweist, wobei die Faserziehrate pro Öffnung an den Durchmesser des Schleudertellers angepasst ist.

4. Verfahren nach einem der Ansprüche 1 bis 3, **dadurch gekennzeichnet, dass** das Schleuderorgan eine von Öffnungen durchsetzte Höhe des Mantels von höchstens 35 mm aufweist.

5. Verfahren nach einem der Ansprüche 1 bis 4, **dadurch gekennzeichnet, dass** der Durchmesser der Öffnungen des Schleuderorgans zwischen 0,5 und 1,1 mm beträgt.

6. Verfahren nach einem der Ansprüche 1 bis 5, **dadurch gekennzeichnet, dass** die Öffnungen des Schleuderorgans auf mehrere Ringzonen verteilt sind, wobei die Öffnungen von Zone zu Zone Reihen von Öffnungen mit einem verschiedenen Durchmesser aufweisen und der Durchmesser je Ringzone in der Zentrifugierposition vom oberen Teil des Umfangsmantels des Schleudertellers auf dessen unteren Teil hin abnimmt.

7. Verfahren nach Anspruch 6, **dadurch gekennzeichnet, dass** der Abstand zwischen den Mittelpunkten benachbarter Öffnungen einer gleichen Ringzone in einer gesamten Ringzone konstant oder nicht konstant ist, und dass dieser Abstand von Zone zu Zone um mindestens 3% oder sogar mindestens 10% variiert und in der Zentrifugierposition vom oberen Teil des Umfangsmantels des Schleudertellers auf dessen unteren Teil hin abnimmt, insbesondere mit einem Abstand von zwischen 0,8 mm und 2 mm.

## Claims

1. A mineral wool manufacturing process using an installation comprising an internal centrifugation device that comprises a spinner (11) capable of rotating about an axis X, especially a vertical axis, and the peripheral band (12) of which is drilled with a plurality of orifices (17) for delivering filaments of a molten material, a high-temperature gas attenuating means in the form of an annular burner (20), which attenuates the filaments into fibers, and a receiving belt (50) associated with suction means for receiving the fibers, **characterized in that** said process consists in controlling a combination of parameters, these being, at least, the pressure of the burner between 450 and 750 mm WC, the rotation of the spinner at a speed greater than 2000 revolutions/minute and the daily fiber output per spinner orifice, which is at most 0.5 kg and preferably at most 0.4 kg and **in that** the installation includes a conveyor (60) that extends the receiving belt (50), the run speed of the conveyor (60) being greater than the run speed of the receiving belt (50), in particular by more than 10% and preferably by at least 15%.

2. The process as claimed in claim 1, **characterized in that** the throughput of molten material entering the spinner is less than 18 tonnes/day for a spinner having at least 32 000 orifices, and preferably in a combination of throughput of at most 14 tonnes/day and of a spinner with at least 36 000 orifices.

3. The process as claimed in claim 1 or 2, **characterized in that** the spinner has a diameter of between 200 and 800 mm, the fiber output per orifice being adapted to the diameter of the spinner.

4. The process as claimed in one of claims 1 to 3, **characterized in that** the spinner has an orifice-perforated band height of at most 35 mm.

5. The process as claimed in one of claims 1 to 4, **characterized in that** the diameter of the spinner orifices is between 0.5 and 1.1 mm.

6. The process as claimed in one of claims 1 to 5, **characterized in that** the spinner orifices are distributed in several annular zones, the orifices having, from one zone to another, rows of orifices of different diameter, and the diameter per annular row decreasing, in the centrifugation position, from the top of the peripheral band of the spinner toward the bottom.

7. The process as claimed in claim 6, **characterized in that** the distance between the centers of neighboring orifices in the same annular zone may or may not be constant throughout an annular zone, and this distance varies from one zone to another by at least 3% or even by at least 10%, and, in the centrifugation position, decreases from the top of the peripheral band of the spinner toward the bottom, with in particular a distance between 0.8 mm and 2 mm.
